Europäisches Patentamt

European Patent Office

Office européen des brevets

(11) Veröffentlichungsnummer: **0 100 870**
**B1**

## EUROPÄISCHE PATENTSCHRIFT

(45) Veröffentlichungstag der Patentschrift:
**19.02.86**

(21) Anmeldenummer: **83106605.5**

(22) Anmeldetag: **06.07.83**

(51) Int. Cl.⁴: **C 01 B 25/32**

(54) **Verfahren zur Herstellung von Calciummonohydrogenphosphatdihydrat.**

(30) Priorität: **23.07.82 DE 3227523**

(43) Veröffentlichungstag der Anmeldung:
**22.02.84 Patentblatt 84/8**

(45) Bekanntmachung des Hinweises auf die Patenterteilung:
**19.02.86 Patentblatt 86/8**

(84) Benannte Vertragsstaaten:
**AT BE CH DE FR GB LI NL**

(56) Entgegenhaltungen:
**AT - B - 212 803**
**DE - B - 1 216 264**
**DE - B - 1 567 616**
**DE - C - 1 567 609**
**US - A - 4 166 839**

**Die Akte enthält technische Angaben, die nach dem
Eingang der Anmeldung eingereicht wurden und die
nicht in dieser Patentschrift enthalten sind.**

(73) Patentinhaber: **HOECHST AKTIENGESELLSCHAFT,
Postfach 80 03 20, D-6230 Frankfurt am Main 80 (DE)**

(72) Erfinder: **Cremer, Josef, Dr., Karl-Schurz-Strasse 6,
D-5030 Hürth (DE)**
Erfinder: **Holz, Josef, Breite Strasse 20,
D-4048 Grevenbroich 1 (DE)**
Erfinder: **Haas, Hans, Dr., Am Bünnagelring 17,
D-5357 Swisttal Strassfeld (DE)**
Erfinder: **Schulte, Friedrich, Dr., An den Kiefern 6,
D-5353 Mechernich (DE)**

## Beschreibung

Die vorliegende Erfindung betrifft ein Verfahren zur Herstellung von Calciummonohydrogenphosphatdihydrat mit hohem Weissgrad aus reiner Phosphorsäure und natürlichen Calciumcarbonaten.

Nach der DE-B-1216264 ist es zur Herstellung von Calciummonohydrogenphosphatdihydrat mit hohem Weissgrad erforderlich, entsprechend hochwertige Ausgangsstoffe einzusetzen. Neben dem Einsatz von aus durch Verbrennung von gelbem Phosphor hergestellter Phosphorsäure werden als zweiter Ausgangsstoff vielfach ausgesuchte mineralische Calciumcarbonate oder daraus hergestellte Calciumhydroxide verwendet. Es können aber auch als zweiter Ausgangsstoff durch Behandlung von Calciumhydroxid mit $CO_2$ gefälltes Calciumcarbonat oder durch Konvertierung von Calciumnitrat, welches beispielsweise bei der Herstellung von hochprozentigen Volldüngern durch Aufschluss von Rohphosphat mit Salpetersäure anfällt, mittels $NH_3$ und $CO_2$ gewonnenes Calciumcarbonat eingesetzt werden.

Aus der DE-B-1216264 ist weiterhin ein Verfahren zur Herstellung von Calciummonohydrogenphosphatdihydrat mit hohem Weissgrad bekannt, wobei man thermische Phosphorsäure, Calciumchlorid-Lösung und Natronlauge im Molverhältnis 1:1:2 miteinander reagieren lässt und anschliessend das Reaktionsprodukt abfiltriert und aufarbeitet.

Aus der DE-C-1567609 ist es bekannt, Dicalciumphosphatdihydrat dadurch herzustellen, dass man eine wässerige Suspension von Calciumcarbonat mit einem Feststoffgehalt von 50% und 85%ige Phosphorsäure in einen mit einem schnelllaufenden Rührer versehenen Reaktor aus rostfreiem Stahl, in welchem Wasser vorgelegt ist, gleichzeitig einträgt. Dabei wird die Zugabe von Phosphorsäure so geregelt, dass während der Reaktion ein pH-Wert von etwa 3,5 eingehalten wird. Die Endeinstellung des pH-Wertes auf etwa 7,5 erfolgt durch Zugabe der restlichen Calciumcarbonat-Suspension. Die Ausgangsstoffe sind dabei so auszuwählen, dass die Summe ihrer Verunreinigungen an Eisen, Chrom und Mangan weniger als 0,01% beträgt.

Schliesslich stellt man nach der DE-B-1567616 ein Dicalciumphosphatdihydrat mit einer Korngrösse von 40 bis 70% grösser als 40 µm dadurch her, dass man Phosphorsäure und 80 bis 85% des insgesamt einzusetzenden Calciums in Form von in Wasser suspendiertem Calciumcarbonat unter rascher, inniger Vermischung gleichzeitig und in solchen Mengenverhältnissen zueinander in eine Reaktionszone einfliessen lässt, dass während der Zugabe ein pH-Wert von 2,4 bis 3,2 aufrechterhalten wird. Nach Beendigung der gleichzeitigen Zugabe von Phosphorsäure und Calciumcarbonat-Suspension gibt man den Rest des Calciums in Form eines wasserlöslichen Calciumsalzes und Alkalihydroxid in stöchiometrischen Mengen zu, bis sich ein pH-Wert von 8 bis 9 eingestellt hat. Nachdem nach beendeter Zugabe der pH-Wert auf 7,0 bis 7,5 abgefallen ist, trennt man das ausgefallene Dicalciumphosphatdihydrat von der Mutterlauge ab.

Nachteilig ist bei der Verwendung mineralischer Calciumcarbonate oder daraus hergestellter Calciumhydroxide, dass Calciumcarbonate mit zur Herstellung von Calciummonohydrogenphosphatdihydrat mit hohem Weissgrad erforderlicher Reinheit in der Natur nur in geringen Mengen vorkommen. Weiterhin ist die Gewinnung von reinen Calciumcarbonaten durch Behandlung von Calciumhydroxid mit $CO_2$ oder durch Konvertierung von Calciumnitrat mit $NH_3$ und $CO_2$ aufwendig und fordert ihren Preis. Schliesslich ist bei den Verfahren nach der DE-B-1216264 und der DE-B-1567616 von Nachteil, dass dabei zwangsläufig Natriumchlorid-Lösung anfällt, deren Abführung eine ständige Belastung des Abwassers darstellt.

Es ist daher Aufgabe der vorliegenden Erfindung, ein Verfahren zur Herstellung von Calciummonohydrogenphosphatdihydrat mit hohem Weissgrad anzugeben, bei welchem umweltbelastender Zwangsanfall von Salzlösungen unterbleibt und bei welchem calciumhaltiger Ausgangsstoff eingesetzt wird, der kostengünstig und in genügender Menge verfügbar ist. Das wird erfindungsgemäss dadurch erreicht, dass man beliebige Calciumcarbonate in feinkörniger Form in Wasser suspendiert; dass man die Suspension unter Einhaltung von Temperaturen zwischen 0 und 60°C, vorzugsweise zwischen 10 und 40°C, mit der Phosphorsäure in zur Erzielung eines Ca:P-Verhältnisses von 0,20 bis 0,57 erforderlichen Mengen und in solchen Mengen pro Zeiteinheit vermischt, dass ein Überschäumen verhindert wird; dass man nach Beendigung der $CO_2$-Entwicklung die in der Lösung enthaltenen Feststoffe abtrennt; dass man die klare, farblose, saure Lösung gleichzeitig mit in Wasser gelösten oder suspendierten reinen Alkali- und/oder Erdalkalicarbonaten und/oder -hydroxiden unter Rühren in eine Reaktionszone so einspeist, dass bei Reaktionstemperaturen von 20 bis 45°C zunächst ein pH-Wert von 2,0 bis 5,0, vorzugsweise von 2,5 bis 3,5, eingehalten wird und gegen Ende der Reaktion der pH-Wert auf 6,0 bis 8,0 eingestellt wird; und dass man schliesslich das Reaktionsprodukt in bekannter Weise abfiltriert, auswäscht und trocknet.

Das Verfahren gemäss der Erfindung kann weiterhin wahlweise auch noch dadurch ausgestaltet sein, dass

a) man die beliebigen Calciumcarbonate in Abhängigkeit von der Konzentration der einzusetzenden Phosphorsäure in der zwei- bis siebenfachen Gewichtsmenge Wasser suspendiert;

b) als wässerige Alkalihydroxidlösung Natronlauge dient;

c) als in Wasser suspendiertes Erdalkalihydroxid eine wässerige Suspension von reinem Calciumhydroxid dient;

d) als Alkalicarbonat Natriumcarbonat dient;

e) als in Wasser suspendiertes Erdalkalicarbonat eine wässerige Suspension von reinem Calciumcarbonat dient;

f) man zur Erzielung der höheren Ca:P-Verhältnisse den in Wasser suspendierten beliebigen Calciumcarbonaten Polyphosphate zusetzt;

g) man 0,6 bis 10,0 Gewichts% Polyphosphat, bezogen auf die beliebigen Calciumcarbonate, zusetzt;

h) man als Polyphosphat Grahamsches Salz zusetzt.

Mit dem erfindungsgemässen Verfahren lassen sich praktisch alle in der Natur vorkommenden Kalksteine als Ausgangsstoff zur Herstellung von Calciummonohydrogenphosphatdihydrat mit hohem Weissgrad einsetzen. Es lassen sich selbst solche Kalksteine einsetzen, welche infolge ihres relativ hohen Verunreinigungsgrades eine hellgelb bis braune Eigenfarbe aufweisen. Bei der Umsetzung des in Wasser suspendierten Kalksteines mit reiner Phosphorsäure erfolgt seine Zersetzung unter Verflüchtigung von $CO_2$ und Inlösunggehen des Calciums, während jedoch überraschenderweise die im Kalkstein als weissgradbeeinträchtigende Verunreinigungen enthaltenen Elemente, beispielsweise Eisen, Nickel, Mangan, Chrom und Kohlenstoff, in Form unlöslicher Verbindungen zurückbleiben. Diese unlöslichen Verbindungen können von der klaren, sauren Lösung in einfacher Weise, beispielsweise durch Dekantieren, Separieren oder Filtrieren, abgetrennt werden.

Die beim Verfahren gemäss der Erfindung zur Suspendierung verwendete Wassermenge wird zweckmässig so bemessen, dass Phosphorsäure in handelsüblicher Konzentration, beispielsweise als 85%ige $H_3PO_4$, verwendet werden kann. Die jeweilige Menge Calciumcarbonat kann darüber hinaus so bemessen sein, dass sich in der klaren, sauren Lösung ein Ca:P-Verhältnis von 0,47:1 einstellt bzw. die Konzentration an CaO etwa 6% und an $P_2O_5$ etwa 21% beträgt.

Nachteilig sind höhere Ca:P-Verhältnisse sowie Reaktionstemperaturen über 60° C, weil dabei unmittelbar ausfallendes Calciummonohydrogenphosphat mit den Verunreinigungen abgetrennt wird und damit zu Verlusten führt.

Beim erfindungsgemässen Verfahren lassen sich in der klaren, sauren Lösung auch höhere Ca:P-Verhältnisse einstellen, ohne dass es in kurzer Zeit zur Ausfällung von Calciummonohydrogenphosphatdihydrat kommt und ohne dass eine Zunahme der Löslichkeit der Verunreinigungen erfolgt, wenn während der Umsetzung der beliebigen Calciumcarbonate mit der Phosphorsäure gelöste Polyphosphate vorhanden sind. So erlaubt beispielsweise ein Zusatz von 0,6% Grahamschen Salz, bezogen auf Calciumcarbonat, das Ca:P-Verhältnis ohne Nachteil auf 0,57:1 zu erhöhen.

Setzt man beim Verfahren gemäss der Erfindung die klare, saure Lösung mit reiner Natronlauge oder reinem Natriumcarbonat um, so ist es aus wirtschaftlichen Erwägungen erforderlich, die nach Abtrennung des Calciummonohydrogenphosphatdihydrats als Filtrat anfallende reine Natriumphosphatlösung als Rohstoff beispielsweise für die Herstellung von kondensierten Natriumphosphaten einzusetzen.

Nach dem erfindungsgemässen Verfahren bedeutet die Umsetzung der klaren, sauren Lösung mit reinem Calciumcarbonat oder -hydroxid in der Praxis eine Streckung bzw. Einsparung der relativ wertvollen reinen Calciumrohstoffe.

Wird beim Verfahren gemäss der Erfindung die Umsetzung der klaren, sauren Lösung mit den Alkali- bzw. Erdalkalicarbonaten bzw. -hydroxiden bei Temperaturen unter 50° C durchgeführt, so erhält man Calciummonohydrogenphosphatdihydrat, während bei Temperaturen über 60° C mindestens anteilmässig das kristallwasserfreie Produkt (Calciummonohydrogenphosphat) gebildet wird.

*Beispiel 1 (Nach dem Stand der Technik)*

In einem Doppelmantel-Reaktor aus Edelstahl mit schnellaufenden Propeller-Rührer (1450 U/min) wurden gleichzeitig eine 35 gewichtsprozentige Lösung von Calciumchloriddihydrat (p.A.), 50 gewichtsprozentige Natronlauge und 85 gewichtsprozentige reine Phosphorsäure (bezogen auf $H_3PO_4$) im Molverhältnis 1:2:1 eingespeist. Zur Gewährleistung einer wirksamen Durchmischung von Anfang an war im Reaktor soviel Wasser vorgelegt worden, dass die Rührerflügel eintauchten. Dabei erfolgte die Zugabe von Calciumchloridlösung und Natronlauge im stöchiometrischen Verhältnis (bezogen auf $Ca(OH)_2$), während die Einspeisung der Phosphorsäure so geregelt wurde, dass während der Reaktion der pH-Wert 2,5 bis 4,5 betrug und sich zuletzt etwa pH 7 einstellte. Während der Einspeisung der drei Komponenten stieg die Temperatur im Reaktor von 22 auf 42° C an. Das ausgefallene Calciummonohydrogenphosphatdihydrat wurde abfiltriert, praktisch chlorfrei gewaschen und bei 60° C getrocknet.

Der Weissgrad dieses Produktes wurde als «ideal-weiss» definiert und als 100% angesetzt.

*Beispiel 2 (Vergleichsbeispiel)*

Die folgenden Calcium-Rohstoffe

(I) ausgesuchtes natürliches Calciumcarbonat
(II) Natur-Kalkstein mit gelblicher Eigenfarbe
(III) Natur-Kalkstein mit bräunlicher Eigenfarbe
(IV) Natur-Kalkstein mit gräulicher Eigenfarbe wurden in den im Beispiel 1 verwendeten Doppelmantel-Reaktor jeweils gemeinsam mit 85 gewichtsprozentiger reiner Phosphorsäure unter Einstellung eines pH-Bereiches von 2,3 bis 3,5 eingespeist. Die Endeinstellung auf pH 7 erfolgte mit Natronlauge. Die Reaktionstemperatur lag zwischen 20 und 40° C. Das Abfiltrieren, Waschen und Trocknen der Fällungsprodukte erfolgte analog Beispiel 1.

Die Weissgrade der erhaltenen Calciummonohydrogenphosphatdihydrate waren wie folgt:

Mit Rohstoff (I) 97%
Mit Rohstoff (II) 92% bezogen auf das Produkt
Mit Rohstoff (III) 77% nach Beispiel 1
Mit Rohstoff (IV) 70%

*Beispiel 3 (Gemäss der Erfindung)*

In den im Beispiel 1 verwendeten Doppelmantel-Reaktor wurden in eine Vorlage von 182 Gewichtsteilen Wasser jeweils 32 Gewichtsteile der Calcium-Rohstoffe (I) bis (IV) nach Beispiel 2 suspendiert. In die Suspension wurden 100 Gewichtsteile 85 gewichtsprozentiger reiner Phosphorsäure derart eingetragen, dass durch die $CO_2$-Entwicklung kein Überschäumen verursacht wurde. Dabei wurde die Reaktionstemperatur im Bereich von 10 bis 60°C gehalten. Nach beendeter $CO_2$-Freisetzung wurde von der geringen Menge ungelöster Verunreinigungen des Rohstoffes (I) durch Dekantieren sowie von den grösseren Rückstandsmengen des Rohstoffes (II) durch Separieren, des Rohstoffes (III) mit Hilfe eines Drehfilters und des Rohstoffes (IV) mit Hilfe einer Filterpresse abgetrennt. Nach kurzem Trüblauf, welcher zurückgeführt wurde, resultierten jeweils klare, farblose, saure Lösungen mit etwa 6% CaO und etwa 21% $P_2O_5$, was einem Ca:P-Verhältnis von etwa 0,47 entspricht.

Die klaren, sauren Lösungen wurden jeweils gemeinsam mit 50 gewichtsprozentiger Natronlauge derart in den im Beispiel 1 verwendeten Reaktor eingespeist, dass ein pH-Wert im Bereich von 2 bis 4,5 eingehalten wurde. Am Schluss wurde mit Natronlauge auf pH 7 eingestellt. Die Reaktionstemperatur lag zwischen 20 und 40°C. Das Abfiltrieren, Waschen und Trocknen der Fällungsprodukte erfolgte analog Beispiel 1.

Die Weissgrade der erhaltenen Calciummonohydrogenphosphatdihydrate waren wie folgt:

Mit Rohstoff (I)   99%
Mit Rohstoff (II)  100%  bezogen auf das Produkt
Mit Rohstoff (III)  99%  nach Beispiel 1
Mit Rohstoff (IV)  99%

### Beispiel 4 (Gemäss der Erfindung)

Die im Beispiel 3 mit dem Rohstoff (III) erhaltene klare, farblose, saure Lösung wurde gleichzeitig mit feinkörniger Soda in den im Beispiel 1 verwendeten Doppelmantel-Reaktor eingetragen, wobei der pH-Wert zwischen 2 und 4,5 variierte. Die Einstellung auf pH 7 erfolgte schliesslich mit 50 gewichtsprozentiger Natronlauge. Die Reaktionstemperatur lag zwischen 21 und 42°C. Das Abfiltrieren, Waschen und Trocknen des Fällungsproduktes erfolgte analog Beispiel 1.

Der Weissgrad des erhaltenen Calciummonohydrogenphosphatdihydrates war 99%, bezogen auf das Produkt nach Beispiel 1.

### Beispiel 5 (Gemäss der Erfindung)

In den im Beispiel 1 verwendeten Doppelmantel-Reaktor wurden gleichzeitig die in Beispiel 3 mit dem Rohstoff (II) erhaltene klare, farblose, saure Lösung mit feinkörnigem Calciumcarbonat (Rohstoff (I) in Beispiel 2) eingetragen, wobei der pH-Wert zwischen 2 und 4 variierte. Die Einstellung auf pH 7 erfolgte schliesslich durch Zugabe einer wässerigen Suspension von reinem Calciumhydroxid. Die Reaktionstemperatur lag zwischen 20 und 40°C. Das Abfiltrieren, Waschen und Trocknen des Fällungsproduktes erfolgte analog Beispiel 1.

Der Weissgrad des erhaltenen Calciummonohydrogenphosphatdihydrates war 99%, bezogen auf das Produkt nach Beispiel 1.

### Beispiel 6 (Gemäss der Erfindung)

Die im Beispiel 3 mit dem Rohstoff (I) erhaltene klare, farblose, saure Lösung wurde gleichzeitig mit einer wässerigen Suspension von reinem Calciumhydroxid in den im Beispiel 1 verwendeten Doppelmantel-Reaktor so eingetragen, dass der pH-Wert zwischen 2 und 5 variierte. Am Schluss wurde mit der Calciumhydroxid-Suspension pH 7 eingestellt. Die Reaktionstemperatur lag zwischen 22 und 42°C. Das Abfiltrieren, Waschen und Trocknen des Fällungsproduktes erfolgte analog Beispiel 1.

Der Weissgrad des erhaltenen Calciummonohydrogenphosphatdihydrates war 99%, bezogen auf das Produkt nach Beispiel 1.

### Beispiel 7 (Gemäss der Erfindung)

In den im Beispiel 1 verwendeten Doppelmantel-Reaktor wurden 190 Gewichtsteile Wasser vorgelegt, in welchem 0,22 Gewichtsteile Grahamsches Salz [$(NaPO_3)_x$] gelöst waren. In die Vorlage wurden 39 Gewichtsteile des Calcium-Rohstoffes (IV) nach Beispiel 2 eingetragen. In die Suspension wurden 100 Gewichtsteile 85 gewichtsprozentiger reiner Phosphorsäure derart eingetragen, dass durch die $CO_2$-Entwicklung kein Überschäumen verursacht wurde. Dabei wurde die Reaktionstemperatur im Bereich von 10 bis 30°C gehalten. Nach Beendigung der $CO_2$-Freisetzung wurde der unlösliche Rückstand mit Hilfe einer Filterpresse abgetrennt. Nach kurzem Trüblauf, welcher zurückgeführt wurde, resultierte eine klare, farblose, saure Lösung mit etwa 7% CaO und etwa 20% $P_2O_5$, was einem Ca:P-Verhältnis von etwa 0,57 entspricht.

In den im Beispiel 1 verwendeten Doppelmantel-Reaktor wurden gleichzeitig diese klare, saure Lösung und feinkörniges Calciumcarbonat (Rohstoff(I) in Beispiel 2) eingetragen, wobei der pH-Wert zwischen 2,5 und 4,0 variierte. Schliesslich erfolgte die Einstellung auf pH 7 durch Zugabe einer wässerigen Suspension von reinem Calciumhydroxid. Die Reaktionstemperatur lag zwischen 22 und 40°C. Das Abfiltrieren, Waschen und Trocknen des Fällungsproduktes erfolgte analog Beispiel 1.

Der Weissgrad des erhaltenen Calciummonohydrogenphosphatdihydrates betrug 99%, bezogen auf das Produkt nach Beispiel 1.

Die in Beispielen 1 bis 7 angeführten Weissgrade wurden mit Hilfe eines elektrischen Remissionsphotometers («Elrepho») der Fa. Carl Zeiss gemessen, wobei monochromatisches Licht der Wellenlänge 577 nm (Filter R 57) verwendet wurde.

In den Beispielen 3 und 7 kann das Überschäumen durch die $CO_2$-Entwicklung durch Zugabe bekannter Entschäumungsmittel, beispielsweise auf Basis von Silikonen, verhindert werden.

In den Beispielen 3 bis 7 kann die Abtrennung der in der Lösung enthaltenen Feststoffe durch Zusatz von bekannten Flockungsmitteln, beispielsweise auf Basis von Polyacrylamiden, erleichtert werden.

Die in den Beispiel 1 bis 7 verwendete reine Phosphorsäure kann durch Verbrennen von gelbem Phosphor und Adsorption des dabei gebildeten $P_2O_5$ oder durch Extraktionsreinigung von Nassphosphorsäure, beispielsweise gemäss EP-A-0029132 mit anschliessender Entfluorierung, gewonnen worden sein.

## Patentansprüche

1. Verfahren zur Herstellung von Calciummonohydrogenphosphatdihydrat mit hohem Weissgrad aus reiner Phosphorsäure und natürlichen Calciumcarbonaten, dadurch gekennzeichnet, dass man beliebige Calciumcarbonate in feinkörniger Form in Wasser suspendiert; dass man die Suspension unter Einhaltung von Temperaturen zwischen 0 und 60°C, vorzugsweise zwischen 10 und 40°C, mit der Phosphorsäure in zur Erzielung eines Ca:P-Verhältnisses von 0,20 bis 0,57 erforderlichen Mengen und in solchen Mengen pro Zeiteinheit vermischt, dass ein Überschäumen verhindert wird; dass man nach Beendigung der $CO_2$-Entwicklung die in der Lösung enthaltenden Feststoffe abtrennt; dass man die klare, farblose, saure Lösung gleichzeitig mit in Wasser gelösten oder suspendierten reinen Alkali- und/oder Erdalkalicarbonaten und/oder -hydroxiden unter Rühren in eine Reaktionszone so einspeist, dass bei Reaktionstemperaturen von 20 bis 45°C zunächst ein pH-Wert von 2,0 bis 5,0, vorzugsweise von 2,5 bis 3,5, eingehalten wird und gegen Ende der Reaktion der pH-Wert auf 6,0 bis 8,0 eingestellt wird; und dass man schliesslich das Reaktionsprodukt in bekannter Weise abfiltriert, auswäscht und trocknet.

2. Verfahren nach Anspruch 1, dadurch gekennzeichnet, dass man die beliebigen Calciumcarbonate in Abhängigkeit von der Konzentration der einzusetzenden Phosphorsäure in der zwei- bis siebenfachen Gewichtsmenge Wasser suspendiert.

3. Verfahren nach Anspruch 1 oder 2, dadurch gekennzeichnet, dass als wässerige Alkalihydroxidlösung Natronlauge dient.

4. Verfahren nach einem der Ansprüche 1 bis 3, dadurch gekennzeichnet, dass als in Wasser suspendiertes Erdalkalihydroxid eine wässerige Suspension von reinem Calciumhydroxid dient.

5. Verfahren nach einem der Ansprüche 1 bis 4, dadurch gekennzeichnet, dass als Alkalicarbonat Natriumcarbonat dient.

6. Verfahren nach einem der Ansprüche 1 bis 5, dadurch gekennzeichnet, dass als in Wasser suspendiertes Erdalkalicarbonat eine wässerige Suspension von reinem Calciumcarbonat dient.

7. Verfahren nach einem der Ansprüche 1 bis 6, dadurch gekennzeichnet, dass man zur Erzielung der höheren Ca:P-Verhältnisse den in Wasser suspendierten beliebigen Calciumcarbonaten Polyphosphate zusetzt.

8. Verfahren nach Anspruch 7, dadurch gekennzeichnet, dass man 0,6 bis 10,0 Gewichts% Polyphosphat, bezogen auf die beliebigen Calciumcarbonate, zusetzt.

9. Verfahren nach Anspruch 7 oder 8, dadurch gekennzeichnet, dass man als Polyphosphat Grahamsches Salz zusetzt.

## Claims

1. Process for making calciummonohydrogen phosphate dihydrate with a high degree of whiteness from pure phosphoric acid and naturally occurring calcium carbonates which comprises: suspending the calcium carbonate in form of fine particles in water; mixing the suspension at temperatures between 0 and 60°C, preferably between 10 and 40°C, with the quantities of phosphoric acid necessary for establishing a Ca/P-ratio of 0.20 to 0.57 and in quantities per unit time necessary for preventing foaming over; separating, after $CO_2$ has ceased to be evolved, the solid matter constituents contained in the solution; introducing with agitation, the clear, colorless, acid solution jointly with pure alkali metal and/or alkaline earth metal carbonates and/or hydroxides dissolved or suspended in water, into a reaction zone so as to establish, at reaction temperatures of 20 to 45°C, a pH-value initially of 2.0 to 5.0, preferably 2.5 to 3.5 and then, towards the end of the reaction, of 6.0 to 8.0; and filtering off, washing out, and drying the reaction product in known fashion.

2. Process as claimed in claim 1, wherein the calcium carbonate is suspended in two to seven times its weight water, depending on the concentration of the phosphoric acid used.

3. Process as claimed in claim 1 or 2, wherein sodium hydroxide solution is used as the aqueous alkali metal hydroxide solution.

4. The process as claimed in any of claims 1 to 3, wherein an aqueous suspension of pure calcium hydroxide is used as the alkaline earth metal hydroxide suspended in water.

5. Process as claimed in any of claims 1 to 4, wherein sodium carbonate is used as the alkali metal carbonate.

6. Process as claimed in any of claims 1 to 5, wherein an aqueous suspension of pure calcium carbonate is used as the alkaline earth metal carbonate suspended in water.

7. Process as claimed in any of claims 1 to 6, wherein a polyphosphate is added to the calcium carbonate suspended in water, to establish the higher Ca/P-ratios.

8. Process as claimed in claim 7, wherein 0.6 to 10.0 weight% polyphosphate, based on the calcium carbonate, is added.

9. Process as claimed in claim 7 or 8, wherein Graham's salt is used as the polyphosphate.

## Revendications

1. Procédé de préparation de phosphate dicalcique dihydraté à degré de blancheur élevé à partir d'acide phosphorique pur et de carbonates de calcium naturels, caractérisé en ce que l'on met en suspension dans l'eau des carbonates de calcium à grain fin quelconques; on mélange la suspension, en maintenant une température de 0 à 60°C, de préférence 10 à 40°C, avec l'acide phosphorique en quantité nécessaire pour établir un rapport Ca/P de 0,20 à 0,57 et en quantité par unité de temps nécessaire pour empêcher un moussage excessif; à la fin du dégagement de $CO_2$, on sépare les matières solides contenues dans la solution; on introduit simultanément, en agitant, la solution acide, incolore, limpide avec les carbonates et/ou les hydroxydes alcalins et/ou alcalino-terreux dissous ou en suspension dans l'eau dans une zone de réaction de manière à établir d'abord, à des températures de réaction de 20 à 45°C, un pH de 2,0 à 5,0, de préférence 2,5 à 3,5, et vers la fin de la réaction, un pH de 6,0 à 8,0; et enfin, on filtre, on lave et on sèche le produit de réaction de manière connue.

2. Procédé selon la revendication 1, caractérisé en ce que l'on met les carbonates de calcium quelconques en suspension dans deux à sept fois leur poids d'eau, en fonction de la concentration de l'acide phosphorique utilisé.

3. Procédé selon la revendication 1 ou 2, caractérisé en ce que l'on utilise la lessive de soude comme solution aqueuse d'hydroxyde alcalin.

4. Procédé selon l'une des revendications 1 à 3, caractérisé en ce que l'on utilise une suspension aqueuse d'hydroxyde de calcium pur comme hydroxyde alcalino-terreux en suspension dans l'eau.

5. Procédé selon l'une des revendications 1 à 4, caractérisé en ce que l'on utilise le carbonate de sodium comme carbonate alcalin.

6. Procédé selon l'une des revendications 1 à 5, caractérisé en ce que l'on utilise une suspension aqueuse de carbonate de calcium pur comme carbonate alcalino-terreux en suspension dans l'eau.

7. Procédé selon l'une des revendications 1 à 6, caractérisé en ce que, pour atteindre les rapports Ca/P plus élevés, on ajoute des polyphosphates aux carbonates de calcium quelconques en suspension dans l'eau.

8. Procédé selon la revendication 7, caractérisé en ce que l'on ajoute 0,6 à 10,0% en poids de polyphosphate, par rapport aux carbonates de calcium quelconques.

9. Procédé selon la revendication 7 ou 8, caractérisé en ce que l'on ajoute du sel de Graham comme polyphosphate.